# EUROPEAN PATENT APPLICATION

(11) **EP 4 822 479 A1**
(43) Date of publication of application: **14.10.2026**
(21) Application number: 25169841.1
(22) Date of filing: 10.04.2025
(51) Int. Cl.: G05D 1/65, G05D 1/242, G05D 1/646, G05D 107/70, G05D 105/28, G05D 109/10, G05D 111/50

(54) **CONTROLLING THE SPEED OF A MINING VEHICLE**

(71) Applicant: SANDVIK MINING AND CONSTRUCTION OY, 33330 Tampere (FI)
(72) Inventor: SNELLMAN, Olli, 33330 Tampere (FI)
(74) Representative: Sandvik

(57) **Abstract**

A method for controlling speed of a mining vehicle may comprise: determining a route for the mining vehicle; determining a first speed for the mining vehicle for travelling on the route for a first time; monitoring at least one operational parameter of the mining vehicle with respect to at least one tolerance criterion, when travelling on the route for the first time; and determining, based on the monitoring of the at least one operational parameter with respect to the at least one tolerance criterion during the travelling on the route for the first time, a second speed for the mining vehicle for travelling on the route for a second time.

## Description

### TECHNICAL FIELD

Various example embodiments generally relate to the field of mining vehicles. Some example embodiments relate to controlling speed of a mining vehicle.

### BACKGROUND

In various applications, such as for example underground mining, it may be desired to automate mining operations by using autonomous mining vehicles, such as loaders, dumpers, mining trucks, drill rigs, or the like. When performing their operations, mining vehicles may need to drive through narrow portions of tunnels in different conditions. In case of a mining automation system, operations of autonomous mining vehicles may be monitored remotely.

### SUMMARY

The invention is defined by the features of the independent claims. Some specific embodiments are defined in the dependent claims. This summary is provided to introduce a selection of concepts in a simplified form that are further described below in the detailed description. This summary is not intended to identify key features or essential features of the claimed subject matter, nor is it intended to be used to limit the scope of the claimed subject matter.

According to a first aspect, an apparatus for controlling speed of a mining vehicle is disclosed. The apparatus may comprise: at least one processor; and at least one memory including computer program code, the at least one memory and the computer program code configured to, with the at least one processor, cause the apparatus at least to: determine a route for the mining vehicle; determine a first speed for the mining vehicle for travelling on the route for a first time; monitor at least one operational parameter of the mining vehicle with respect to at least one tolerance criterion, when travelling on the route for the first time; and determine, based on the monitoring of the at least one operational parameter with respect to the at least one tolerance criterion during the travelling on the route for the first time, a second speed for the mining vehicle for travelling on the route for a second time.

According to a second aspect, a mining vehicle is disclosed. The mining vehicle may comprise: at least one processor; and at least one memory including computer program code, the at least one memory and the computer program code configured to, with the at least one processor, cause the mining vehicle at least to: determine a route for the mining vehicle; determine a first speed for the mining vehicle for travelling on the route for a first time; monitor at least one operational parameter of the mining vehicle with respect to at least one tolerance criterion, when travelling on the route for the first time; and determine, based on the monitoring of the at least one operational parameter with respect to the at least one tolerance criterion during the travelling on the route for the first time, a second speed for the mining vehicle for travelling on the route for a second time.

According to a third aspect, a method for controlling speed of a mining vehicle is disclosed. The method may comprise: determining a route for the mining vehicle; determining a first speed for the mining vehicle for travelling on the route for a first time; monitoring at least one operational parameter of the mining vehicle with respect to at least one tolerance criterion, when travelling on the route for the first time; and determining, based on the monitoring of the at least one operational parameter with respect to the at least one tolerance criterion during the travelling on the route for the first time, a second speed for the mining vehicle for travelling on the route for a second time.

According to a fourth aspect, an apparatus for controlling speed of a mining vehicle is disclosed: means for determining a route for the mining vehicle; means for determining a first speed for the mining vehicle for travelling on the route for a first time; means for monitoring at least one operational parameter of the mining vehicle with respect to at least one tolerance criterion, when travelling on the route for the first time; and means for determining, based on the monitoring of the at least one operational parameter with respect to the at least one tolerance criterion during the travelling on the route for the first time, a second speed for the mining vehicle for travelling on the route for a second time.

According to a fifth aspect, a computer program, a computer program product, or a (non-transitory) computer-readable medium for detecting an event of a mining vehicle is disclosed. The computer program, computer program product, or (non-transitory) computer-readable medium may comprise program instructions which, when executed by an apparatus, cause the apparatus at least to: determine a route for the mining vehicle; determine a first speed for the mining vehicle for travelling on the route for a first time; monitor at least one operational parameter of the mining vehicle with respect to at least one tolerance criterion, when travelling on the route for the first time; and determine, based on the monitoring of the at least one operational parameter with respect to the at least one tolerance criterion during the travelling on the route for the first time, a second speed for the mining vehicle for travelling on the route for a second time.

According to some aspects, there is provided the subject matter of the independent claims. Some further aspects are defined in the dependent claims. Many of the attendant features will be more readily appreciated as they become better understood by reference to the following description considered in connection with the accompanying drawings.

### LIST OF DRAWINGS

The accompanying drawings, which are included to provide a further understanding of the example embodiments and constitute a part of this specification, illustrate example embodiments and, together with the description, help to explain the example embodiments. In the drawings:
FIG. 1 illustrates an example of a mining vehicle;
FIG. 2 illustrates an example of a mining vehicle communicatively coupled to an external control system;
FIG. 3 illustrates an example of an articulated mining vehicle;
FIG. 4 illustrates an example of a flow chart for controlling speed of a mining vehicle;
FIG. 5 illustrates an example of a route inside a mining tunnel;
FIG. 6 illustrates an example of measurements by distance sensors mounted on a mining vehicle;
FIG. 7 illustrates an example of an apparatus configured to practise one or more example embodiments; and
FIG. 8 illustrates an example of a method for controlling a mining vehicle. Like references are used to designate like parts in the accompanying drawings.

### DESCRIPTION

Reference will now be made to embodiments, examples of which are illustrated in the accompanying drawings. The description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

Autonomous mining vehicles may be configured to operate under control of a mining automation system. For example, a mapping solution may be configured to provide a user interface, including for example a three-dimensional (3D) visualization of a mine, to enable a user to configure a route for a mining vehicle. A route may comprise route points such as route start point, route end point, intermediate route points, and/or one or more operating points. A route may comprise a set of defined route positions, e.g., within a mine, along which a mining vehicle is desired or configured to travel. Such a route may be alternatively referred to as a trajectory.

An operating point may comprise a position configured for performing an operation by the mining vehicle. An operating point may be part of the route. The operation may comprise an operation or a task assigned to the mining vehicle. The operating point may be located within a mine or some other working area of the mining vehicle. Examples of operating points include, but are not limited to, a loading point and a dumping point. A loading point may comprise a position within a mine, the position being configured for loading mining material on a mining vehicle, for example on a bucket of or dump box of the mining vehicle. A dumping point may comprise a position within a mine, the position being configured for dumping mining material, for example from the bucket or dump box of the mining vehicle.

An autonomous mining vehicle may be configured with a predefined route. The route may comprise one or more route segments. The route may be associated with a requested speed for driving through the route, e.g., in a tunnel. For example, one or more (e.g., each) of the route segments may be associated with a segment-specific requested speed. The requested speed might vary for curves (e.g., be lower in tight turns) or slopes compared to straight sections. A route segment may comprise a subset of consecutive route points of the route. Adaptive speed control of the mining vehicle may be implemented based on analysis of real-time data while driving. Information may be collected from onboard sensor(s) of the mining vehicle and/or from a control system providing information about operational parameter(s) of the mining vehicle. An operational parameter may comprise a parameter associated with movement of the mining vehicle, for example associated with travelling of the mining vehicle along the route. Examples of operational parameters include current speed of the mining vehicle, accuracy of how well the route is followed, deviation from an expected distance to left and right side walls (e.g., from front and/or rear frame of the mining vehicle in case of middle-joint steering), or data related to road conditions (e.g., inertial measurement unit (IMU) data). The speed of the mining vehicle may be adjusted accordingly. The adjustment may be performed according to a configuration, e.g., how much the speed is to be accelerated at once, what is the maximum allowed speed, how much deviation from the original speed profile is allowed, or the like.

The mining vehicle may be configured to start driving using the a requested speed reference, and if allowed, and if the mining vehicle does not violate any applicable tolerance criteria, the speed of the mining vehicle may be increased, for example with a given step such as +1 km/h. Examples of tolerance criteria include deviation from the planned route, distance(s) to tunnel wall(s), or road conditions (e.g., vertical acceleration monitored via IMU 118). A tolerance criterion may comprise a safety requirement that is requested to be fulfilled, for example to ensure safe operation. The tolerance criterion may comprise a route-specific safety requirement, a route segment-specific safety requirement, or a route point-specific safety requirement. A tolerance criterion may comprise a threshold for an operational parameter associated with the safety requirement. The tolerance criteria may be monitored constantly, and if the criteria are not violated, next time on the same drive route the speed may be again increased with a given step. This may be repeated until either maximum speed limit is reached or the mining vehicle violates the tolerance criteria. A tolerance criterion is an example of an adaptive speed control parameter.

When the mining vehicle has violated the tolerance criteria, the speed may be decreased, for example to previous a value with which the mining vehicle did not violate the tolerance criteria. The speed increase may be attempted for a configurable maximum number of times. A speed increase counter may be reset, in response detecting violation of the tolerance criteria. The tolerance criteria may be also used to decrease the speed as needed. Such a situation may occur for example when road conditions deteriorate, for example due to driving the same route for many times. When, after decreasing the speed possibly multiple times, the tolerance criteria are no longer violated, the speed may be increased again using the above logic in order to reach an optimal speed. Information about the used speed may be stored on onboard logic of the mining vehicle and the adaptive speed control functionality may be turned on or off, or reset to original default value for speed. Example embodiments of the present disclosure therefore provide methods for adaptive speed control of a mining vehicle when travelling a given route. It is noted that even though some example embodiments have been described as using multiple tolerance criteria, it is understood that same functionality may be performed using a single tolerance criterion.

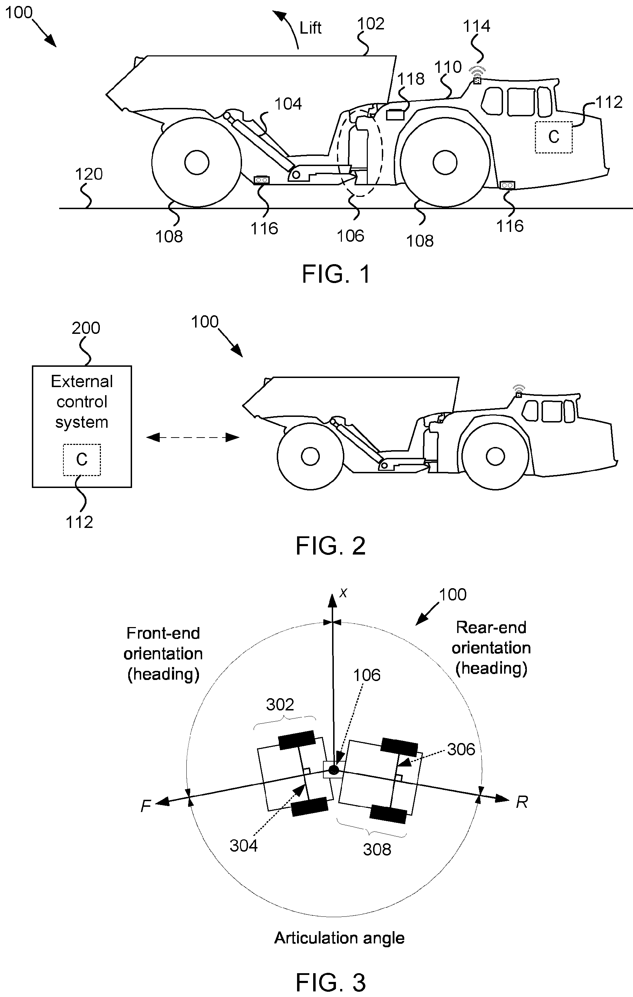

FIG. 1 illustrates an example of a mining vehicle. Example embodiments disclosed herein may relate to various mining vehicles such as the dumper illustrated in FIG. 1. However, it is appreciated that the example embodiments may be applied to other types of mining vehicles, such as loaders, mining trucks, drill rigs, or the like. Mining vehicle 100 may be configured to operate in semi-autonomous or autonomous modes, depending on the implementation and system configuration.

Mining vehicle 100 may be an automated mining vehicle. An automated mining vehicle operating in an automatic mode may be configured to, for example, receive a task to be performed, perceive (portions) of the environment of the automated vehicle, and autonomously perform the task while taking the environment into account. An automated mining vehicle operating in an automatic mode may be configured to operate independently but may be taken under external control at certain operation areas or conditions, such as during states of emergencies. As noted above, example embodiments of the present disclosure may be however applied also semi-autonomous mining vehicle, for example remote-controllable mining vehicles.

Mining vehicle 100 may comprise a movable carrier 110 comprising, for example a motor and wheels 108 for enabling movement of mining vehicle 100. Mining vehicle 100 may comprise a dump box 102 configured to receive a load of mining material. Mining vehicle 100 may comprise components, such as hydraulic cylinder 104, configured to lift dump box 102 to cause mining material provided at dump box 102 to be dumped, for example to ground 120 (e.g., floor of a tunnel or a pit). Movable carrier 110 may be configured to move autonomously or it may be configured to be controlled by a human operator, either remotely or locally at mining vehicle 100. In case of an autonomously operating dumper, controller 112 may be configured to control lifting of dump box 102. Controller 112 may be also configured to control other aspects of mining vehicle 100, such as parts of movable carrier 110 like the motor and wheels.

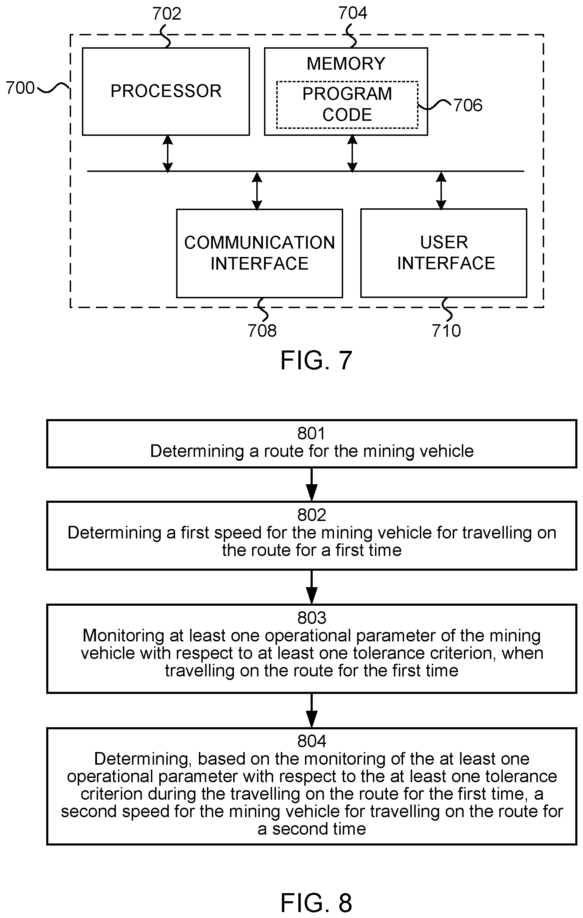

Controller 112 may be for example provided as a software application residing on a memory and being executable by a processor. An example of an apparatus suitable for implementing controller 112 is provided in FIG. 7. Controller 112 may comprise, or be communicatively coupled to, various functions, blocks, or applications for implementing functionality of controller 112. Controller 112 may comprise a navigation application configured to control, or enable external control system 200 to control, speed of mining vehicle 100. Even though controller 112 has been described to perform some function, it is understood that controller 112 may be alternatively configured to cause performance of the function, e.g., by instructing another device or component to perform the function.

Mining vehicle 100 may comprise scanning device(s) 114 for capturing and providing a representation of objects around mining vehicle 100. The scanning device(s) may comprise, for example, one or more of the following: one or more cameras, one or more radio detection and ranging (radar) sensors, or one or more light detection and ranging (lidar) sensors. Based on the scanning, controller 112, or mining vehicle 100 in general, may be configured to obtain point cloud data that represents the scanned environment.

The point cloud data may for example comprise a three-dimensional representation of the objects observable in the environment of mining vehicle 100. The scanning may be implemented, for example, with a simultaneous localization and mapping (SLAM) system, which may be configured to scan environment of mining vehicle 100 to obtain point cloud data of surrounding surfaces or objects and to detect the position of mining vehicle 100. The obtained point cloud data may be used for determining position of mining vehicle 100 based on comparing the scanning data to reference data, such as for example a 3D model of a mining tunnel. The position of mining vehicle 100 may be defined in an external coordinate frame, which may be stationary with respect to ground, for example on a map of a mine. The route may be defined in the same external coordinate frame.

Mining vehicle 100 may comprise at least one distance sensor 116. Distance sensor(s) 116 may be mounted on a side of mining vehicle 100, for example such that distance sensor(s) 116 are configured to measure a distance to an object (e.g., tunnel wall) perpendicular to the driving direction of mining vehicle 100. A pair of sensors may be mounted on different sides of mining vehicle in order to measure the distance to objects on different sides (e.g., left and right) of mining vehicle 100. Sensor(s) may be provided on different parts of mining vehicle 100, for example front-end 302 and/or rear end 308 of mining vehicle 100 (see FIG. 3). Distance sensor(s) 116 may comprise ultrasonic sensor(s), infrared sensor(s), laser distance sensor(s), or the like, in general any device capable of detecting a distance between the device and an object located in a pointing direction of the device. Mining vehicle 100 may comprise an inertial measurement unit (IMU) 118, which may comprise an accelerometer for detecting acceleration of mining vehicle 100 in one or more directions, for example in the vertical direction (e.g., in the direction of gravity).

As illustrated in FIG. 2, mining vehicle 100 may be configured to be controlled by an external control system 200, which may be external to mining vehicle 100. External control system 200 may be for example a server located remote from mining vehicle 100, for example outside the mine. Controller 112 may be located at mining vehicle 100 or external control system 200. Functionality of controller 112 may be also distributed between mining vehicle 100, for example a local controller of mining vehicle 100, and external control system 200. Information may be exchanged between external control system 200 and mining vehicle 100 over a communication interface including any suitable wireless and/or wired connection. Examples of suitable communication interfaces are described with reference to FIG. 7.

External control system 200 may be responsible of controlling and/or monitoring operation of mining vehicle(s), for example by configuration of route(s) and configuration(s) and/or parameter(s), such as adaptive speed control parameter(s), which might be associated with the route(s). External control system 200 may be configured to transmit configuration(s) to mining vehicle 100. A configuration may comprise parameters for controlling speed of mining vehicle 100, for example a maximum allowed speed, maximum increment/decrement for speed adjustment, and/or threshold(s) for tolerance criteria. A threshold for a tolerance criterion is another example of an adaptive speed control parameter.

External control system 200 may comprise a controller, e.g., a control apparatus or control circuitry such as controller 112. Example embodiments of the present disclosure may be implemented by controller 112, a mining vehicle 100, optionally in combination with external control system 200. Information may be exchanged between external control system 200 and mining vehicle 100 (e.g., controller 112) over a communication interface including any suitable wireless and/or wired connection. Mining vehicle 100 or external control system 200 (e.g., controller 112) may comprise communication circuitry, such as a transceiver, for communicating data with other devices, vehicles, or systems. Examples of suitable communication interfaces are described with reference to FIG. 7. External control system 200 may comprise a communication interface, which may be configured for transmission and/or reception of data from devices external to external control system 200, for example mining vehicle 100. The communication interface is not illustrated in FIG. 2, but it may be similar to communication interface 708 of FIG. 7.

FIG. 3 illustrates an example of an articulated mining vehicle. Mining vehicle 100 may be an articulated mining vehicle comprising an articulation point connecting its front and rear ends. An articulated mining vehicle may comprise pivot joint 106, which may improve manoeuvrability of the vehicle, for example when navigating through tight turns or uneven terrain.

An orientation of front end 302 of mining vehicle 100 may be defined with reference to a predefined axis, which may be parallel to ground or perpendicular to vector of gravity. The orientation of front end 302 may comprise an angle between a forward driving direction (F) of mining vehicle 100 and the predefined axis, e.g., on the plane perpendicular to the vector of gravity. A straight forward driving direction may comprise a direction that is substantially perpendicular to front axle 304 of mining vehicle 100. Front axle 304 may be configured to connect front wheels of mining vehicle 100. The orientation of rear end 308 of mining vehicle 100 may comprise an angle between a backward (e.g., reverse) driving direction (R) of mining vehicle 100 and the predefined axis. A straight backward driving direction may comprise a direction that is substantially perpendicular to rear axle 306 of mining vehicle 100. Rear axle 306 may be configured to connect rear wheels of mining vehicle 100. The articulation angle may comprise an angle between longitudinal axes of front end 302 and rear end 308, as illustrated in FIG. 3. Alternatively, the articulation angle may comprise an angle between front and rear axles 304, 306 of mining vehicle 100. In general, the articulation angle may be indicative of the orientation of front end 130 with respect to rear end 308. Front end 302 may be coupled to rear end 308 by pivot joint 106. Regardless of the illustration in FIGs. 1 to 3, mining vehicle 100 may be also a non-articulated vehicle.

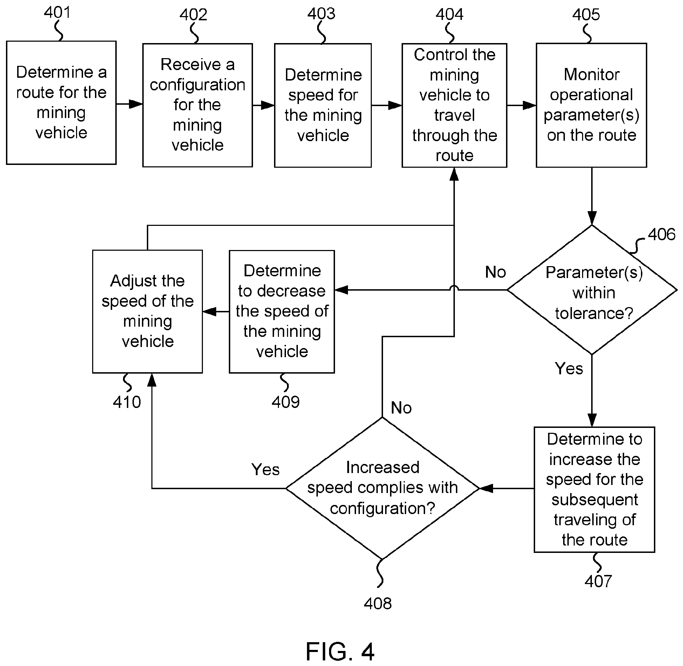

FIG. 4 illustrates an example of a flow chart for controlling speed of a mining vehicle. Even though operations of FIG. 4 have been described to be performed by controller 112, it is understood that similar functionality may be implemented by any suitable component of a mining vehicle 100 or another device such as external control system 200. Controller 112 may perform one or more of operations 401 to 410 for adaptive speed control of mining vehicle 100.

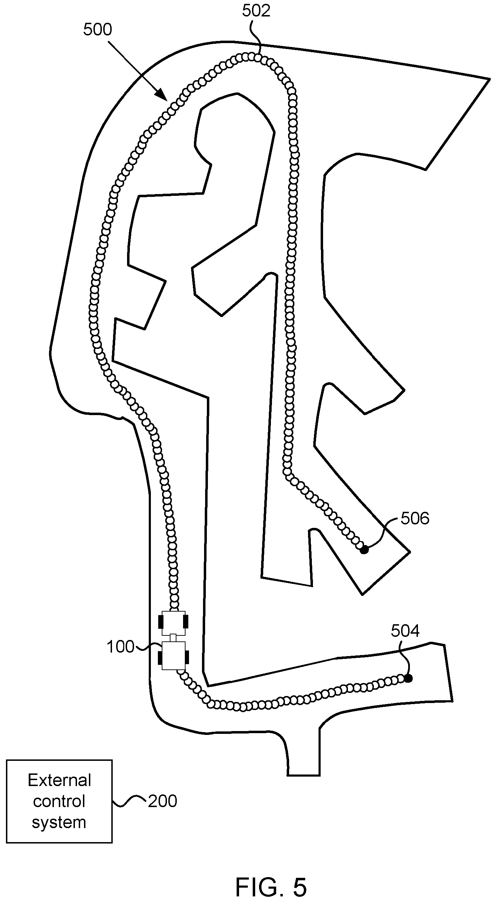

At operation 401, controller 112 may be configured to determine a route for mining vehicle 100. An example of a route is illustrated in FIG. 5. Route 500 may comprise a set of positions through which mining vehicle 100 is configured or planned to travel. Route 500 may be for example defined by a plurality of route points 502, which may comprise route start point 504 (e.g., a loading point) and route end point 506 (e.g., a dumping point). Route 500 (e.g., route points 502) may be defined in the same external coordinate frame as the position of mining vehicle 100. Controller 112 may be configured to determine route 500 based on receiving a configuration of route 500 from another device, e.g., external control system 200 or a server, based on user input received via a user interface, or by retrieving route 500 from a local memory of controller 112, external control system 200, or mining vehicle 100.

At least part of route 500 may be inside a mine (e.g., a mining tunnel). Accordingly, part of route 500 might be outside the mine, contrary to the example of FIG. 5. Route 500 may begin at start point 504 and end at end point 506. It is however possible that start point 504 and end point 506 coincide, thereby defining a circular route which mining vehicle 100 may be configured to travel multiple rounds. In case of a non-circular route such as route 500 of FIG. 5, mining vehicle 100 may be configured to travel route 500 in different directions, for example for a first time from start point 504 to end point 506 and for a second time in the opposite direction from end point 506 to start point 504. A route may be associated with a route identifier. Controller 112 may be configured with a plurality of routes, which may be identified by different route identifiers.

At operation 402, controller 112 may be configured to receive a configuration for the mining vehicle. The configuration may be route-specific, route segment-specific, and/or route-point specific. For example, parameter(s) of the configuration may be associated with, e.g., applicable for, a particular route (e.g., route identifier), one or more segments of the route (e.g., route segment identifier), and/or one or more route points of the or route. The configuration may for example comprise a default configuration for a route or route segment, optionally with a route segment-specific or route point-specific configuration configured to override the default configuration. The configuration may therefore include different requested speeds for different parts of route 500. In this case, controller 112 might be configured to apply a particular configuration, or a particular requested speed of the configuration, for a particular route, route segment, or route point, when controlling speed of mining vehicle 100. This provides the benefit of enabling route-specific, route segment-specific, or route point-specific adaptive speed control, for example based on route-specific, route-segment specific, or route point-specific safety requirement(s). Alternatively, a configuration may be associated with, e.g., applicable for, a plurality of routes. This provides the benefit of reducing complexity of adaptive speed control in case a mining vehicle is configured with multiple routes.

Controller 112 may be configured to receive the configuration from external control system 200, another external device such as a server. Alternatively, the configuration, or any part of it, may be preconfigured at a memory of mining vehicle 100, external control system 200, or controller 112 itself (e.g., memory 704). Controller 112 may be configured to retrieve the configuration from the memory.

The configuration may comprise tolerance criteria for mining vehicle 100. The tolerance criteria may comprise threshold(s) for operational parameter(s) such as positional deviation from route 500, distance(s) to tunnel wall(s), or vertical acceleration. For example, the tolerance criteria may comprise threshold(s) for one or more of the following operational parameters: an amount of deviation of a position of the mining vehicle from route 500, an amount of deviation from an expected distance between mining vehicle 100 and wall(s) of the tunnel along route 500, an amount of deviation from an expected distance between front end 302 and/or a rear end 308 of mining vehicle 100 and the wall(s) of the tunnel along route 500, or vertical acceleration of mining vehicle 100. Controller 112 may be configured to use the threshold(s) for determining whether a respective tolerance criterion is violated by mining vehicle 100 when travelling through route 500, as will be further described with reference to operation 406.

The configuration may comprise a configuration for adjusting speed of mining vehicle 500, e.g., one or more adaptive speed control parameters. Again, the configuration may be route-specific. e.g., associated with a particular route identifier, which may be indicated in the configuration. The configuration for adjusting the speed may comprise restriction(s) for adjusting the speed of mining vehicle. The configuration may for example comprise a maximum increment of the speed of mining vehicle 100, a maximum decrement of the speed of mining vehicle 100, a maximum allowed speed for mining vehicle 100, a maximum number of consecutive speed increments, which are further examples of adaptive speed control parameters. These parameters may be defined for adjusting the speed of mining vehicle for travelling on route 500 for different (e.g., successive) times. These parameters provide the benefit of enabling to control the amount and number of speed adjustments, which improves safety of adaptive speed control.

For example, applying the maximum speed increment (e.g., upper limit for the amount of speed increment) enables to reduce the likelihood of mining vehicle 100 colliding with a wall. Applying the maximum speed decrement (e.g., upper limit for speed decrement) may improve accuracy of finding an optimum speed for route 500, because granularity of speed decrement is limited. The same applies to increment of the speed. Applying a maximum allowed speed improves safety of the adaptive speed control by ensuring that the speed stays below a configured limit regardless of the adaptive speed control. Applying the maximum number of consecutive speed increments improves safety as well. If this configuration is route-specific, controller 112 may be configured to apply a particular restriction for a particular route.

At operation 403, controller 112 may be configured to determine a speed for mining vehicle 100 for travelling on route 500. Functionality of the flow chart of FIG. 4 is described herein using a first speed and a second speed for travelling the route for a first time and second time, respectively. It is however noted that controller 112 may perform multiple iterations of the operations of the flow chart, thereby adjusting the speed for multiple times for travelling route 500, respectively. Hence, terms first/second time and first/second speed may generally refer to any two occasions a speed is determined for travelling the route. The second time may be however subsequent to the first time, e.g., the next time after the first time.

At operation 403, controller 112 may be therefore configured to determine a first speed for mining vehicle 100 to travel on route 500 for the first time. Controller 112 may be configured to determine the first speed based on a default configuration for an initial speed of mining vehicle 100, based on a user input via a user interface, based on a kinematic model of the mining vehicle 100 or by any other means. The first speed might be conservatively selected to prioritize safety. For example, controller 112 may be configured to determine the first speed such that it is lower than the maximum allowed speed indicated in the configuration, e.g., by a predetermined margin. This might be beneficial for instance in a mine with unstable terrain in order to mitigate risks.

At operation 404, controller 112 may be configured to control mining vehicle 100 to travel through route 500 for the first time. Controller 112 may be configured to control mining vehicle 100 to travel route 500 for the first time at the first speed determined at operation 403. For example, controller 112 may be configured to transmit control instructions to components of mining vehicle 100, such as the motor and a steering control system, or mining vehicle 100 in general, in order to cause mining vehicle 100 to travel route 500. It is however noted that even though controller 112 is configured to control mining vehicle 100 to use certain speed, the actual speed of mining vehicle 100 might vary from the desired value, for example due to latency and other non-idealities when controlling components of mining vehicle 100 in order to cause mining vehicle 100 to drive at certain speed.

At operation 405, controller 112 may be configured to monitor operational parameter(s) of mining vehicle 100, when travelling on route 500 for the first time. As indicated above, the operational parameter(s) may comprise parameter(s) indicative of how well mining vehicle 100 follows route 500, for example an amount of deviation of a position of mining vehicle 100 from route 500, an amount of deviation from an expected distance between mining vehicle 100 and wall(s) of the tunnel along route 500, or, an amount of deviation from an expected distance between front end 302 and/or rear end 308 of mining vehicle 100 and the wall(s) of the tunnel along route 500. The operational parameter(s) may be therefore indicative of the status of mining vehicle 100 on route 500. As an example, controller 112 may be configured to monitor proximity to the tunnel wall(s) based on data received from distance sensor(s) 116 while navigating a sharp turn.

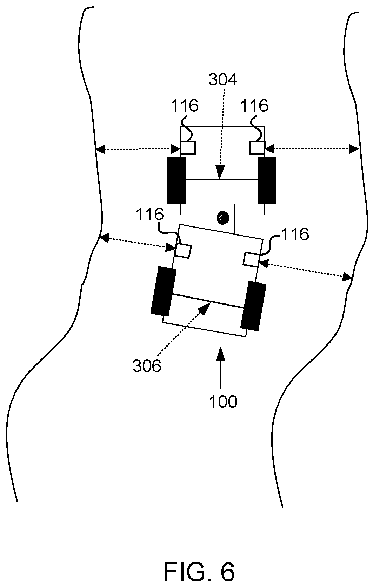

The amount of deviation of the position of mining vehicle 100 from route 500 may comprise a distance between mining vehicle 100 (e.g., a reference point of mining vehicle 100 such as its centre point) and a closest route point 502 of route 500. The closest route point may be a route point that is closest in distance from the current position of mining vehicle 100. As noted above, the position of mining vehicle 100 may be determined by the SLAM system, but any other positioning method may be used, for example any indoor positioning system (e.g., Bluetooth positioning) in case of a mining tunnel or satellite-based positioning in case of an opencast mine. As illustrated in FIG. 6, the distance between mining vehicle, for example front end 302 or rear end 308, and a wall of the tunnel may comprise a distance between any of distance sensors 116 and a wall of the tunnel (e.g., any object detected by a distance sensor). Distance sensor(s) 116 may be configured to measure the distance in a direction which is perpendicular to a driving direction of mining vehicle 100, or in a direction that is parallel to an axle of mining vehicle such as front axle 304 or rear axle 306. In case of an articulated mining vehicle, controller 112 may be configured to monitor distances of both front end 302 and rear end 308 from wall(s) of the tunnel. This provides the benefit of improving safety because distances of the front and rear ends from the wall(s) might be different.

Note that controller 112 may be configured to perform operations 404 and 405 in parallel. Controller 112 may be configured to receive the operational parameter(s), e.g., current value(s) of them, from sensor(s) of mining vehicle 100, for example distance sensor(s) 116, IMU 118, or an accelerometer.

At operation 406, controller 112 may be configured to determine whether the operational parameter(s) of mining vehicle 100 comply with the tolerance criteria during travelling of route 500. For example, when mining vehicle 100 travels along route 500, at this phase for the first time, controller 112 may be configured to compare values of the operational parameter(s) to threshold(s) of the tolerance criteria. Controller 112 may be configured to determine, e.g., based on this comparison, whether the operational parameter(s) comply with the tolerance criteria, or whether at least one tolerance criterion is violated during travelling of the route.

For example, controller 112 may be configured to determine that the tolerance criterion for the amount of deviation of the position of mining vehicle 100 from route 500 is violated, if the distance between mining vehicle 100 and a closest route point 502 exceeds the respective threshold. Compliance with other tolerance criteria, or violation of them, may be determined in a similar manner.

If the monitored operational parameter(s), comprising for example the amount of deviation of the position of the mining vehicle from route, the deviation of the expected distance between mining vehicle 100 and wall(s) of the tunnel along route 500, the deviation of the expected distance between front end 302 and/or rear end 308 of mining vehicle 100 and wall(s) of the tunnel along route 500, and/or vertical acceleration of mining vehicle 100, remain(s) below the threshold, controller 112 may be configured to move to execution of operation 407 to determine to increase the speed of mining vehicle 100. Controller 112 may be configured to move to execution of operation 407, in response to detecting any of the monitored operational parameter(s) to violate the tolerance criteria when travelling through the route, in the phase for the first time.

In general, controller 112 may be configured to move to execution of operation 407, in response to determining that the operational parameter(s) comply with the tolerance criteria throughout the travelling of route 500, e.g., for the first time with the first speed determined at operation 403. In case of a single operational parameter, controller 112 may be configured to move to execution of operation 407, in response to determining that this operational parameter complies with a respective tolerance criterion throughout route 500. In case of monitoring multiple operational parameters, controller 112 may be configured to move to execution of operation 407, in response to determining that each of the monitored operational parameters complies with a respective tolerance criterion throughout route 500.

Controller 112 may be configured to move to execution of operation 409, in response to determining that the operational parameter(s) violate the tolerance criteria during travelling of route 500, e.g., at any point along route 500. In case of a single operational parameter, controller 112 may be configured to move to execution of operation 409, in response to determining that this operational parameter violates the respective tolerance criterion during travelling of route 500. In case of monitoring multiple operational parameters, controller 112 may be configured to move to execution of operation 409, in response to determining that any of the monitored operational parameters violates a respective tolerance criterion during travelling of route 500.

Note that operation 406 may be performed in parallel with operations 404 and 405, for example such that controller 112 is configured to determine, before mining machine 100 has completed route 500, that violation of operational parameter(s) has occurred. Controller 112 may be configured to stop monitoring the operational parameter(s), in response to detecting violation of operational parameter(s). This provides the benefit of enabling to preserve computational resources for other purposes when violation of the one or more tolerance criteria has been already detected.

At operation 407, controller 112 may be configured to determine to increase the speed of mining vehicle 100 for travelling on route 500 for a subsequent time, in this example for the second time. Controller 112 may be configured to determine a second speed for travelling on route 500 for the second time. Considering operation 406, this may be in response to determining the operational parameter(s) to comply with the tolerance criteria throughout the travelling of the route for the first time. The second speed may be higher than the first speed.

Controller 112 may be configured with, or have access to, a counter for keeping track of the number of consecutive speed increments. Controller 112 may be configured to initiate the counter, e.g., at zero. Controller 112 may be configured to increase the counter, in response to a speed increment, e.g., in connection with operation 407. Controller 112 may be configured to reset the counter, e.g., back to zero, in response to detecting violation of the tolerance criteria (e.g., in connection with operation 409).

At operation 408, controller 112 may be configured to determine whether the increase of the speed or the increased speed complies with the configuration received at operation 402. If not, controller 112 may move back to execution of operation 404 to control mining machine 100 to travel along route 500 again with the same speed (first speed). If yes, controller 112 may be configured to move to operation 410 to adjust the speed of mining vehicle 100 accordingly for travelling on route 500 for a subsequent time, in this example for the second time.

Controller 112 may be configured to determine the second speed in accordance with the configuration received at operation 402. This provides the benefit of enabling to control the speed increase, for example the amount of increment, the number of consecutive increments, or to ensure that the speed of mining vehicle 100 stays within a maximum allowed speed. Instead of separate operation for checking whether the increase of the speed or the increased speed complies with the configuration, controller 112 might be configured to determine the second speed in operation 407 such that it complies with the configuration.

At operation 409, controller 112 may be configured to determine to decrease the speed of mining vehicle 100 for travelling route 500 for a subsequent time, in this example for the second time. Considering operation 406, this may be in response to detecting the operational parameter(s) to violate the tolerance criteria during travelling of route 500 for the first time. This provides the benefit of improving safety as the likelihood of collision or damage when travelling through route 500 for the second time is decreased. Accordingly, controller 112 may be configured to determine the second speed to be lower than the first speed. Controller 112 may be configured to determine the second speed in accordance with the configuration received at operation 402. This provides the benefit of enabling to control the speed decrease, for example to keep the amount of decrease below the configured maximum decrement.

At operation 410, controller 112 may be configured to adjust the speed of mining vehicle 100 for travelling route 500 for a subsequent time, in this example for the second time. Considering operations 406, 407, and 409, controller 112 may be configured to determine, based on the monitoring of the operational parameter(s) with respect to the tolerance criteria during the travelling on route 500 for the first time, a second speed for mining vehicle 100 for travelling on route 500 for a second time. The second speed may be lower or higher than the first speed, depending on whether the speed is adjusted via operation 408 or 409. For example, if vertical acceleration exceeds the threshold due to rough terrain, controller 112 may be configured to decrease the speed of mining vehicle 100 to improve stability and compliance with the tolerance criterion set for vertical acceleration. Conversely, controller 112 may be configured to determine to increase the speed of mining vehicle 100 for travelling on route 500 for the second time, in response to detecting the operational parameter(s) to comply with the at least one tolerance criterion throughout the travelling of route 500 for the first time.

When returning to operation 404, controller 112 may be configured to control mining vehicle 100 to travel through route 500 for the second time, either in the same direction (e.g., again from start point 504 to end point 506 if that was the direction for the first time) or in the opposite direction (e.g., from end point 506 back to start point 504). Using the determined second speed for the opposite direction provides the benefit of making the adaptive speed control system more efficient since observations made when travelling route 500 in certain direction are beneficially applied also for the opposite direction. This makes adaptive speed control faster, because waiting for mining vehicle 100 to return to start point 504 before applying the adjusted speed may be avoided.

As the process continues, controller 112 may be configured to monitor the operational parameter(s) when travelling for route 500 for the second time and determine to increase or decrease the speed accordingly, as already described with reference to operations 405 to 409. However, when entering operation 409 during or after travelling route 500 for the second time, controller 112 may be configured to determine to revert to the first speed of mining vehicle 100 for subsequent travelling on route 500. For example, when travelling for route 500 for a third time, controller 112 may be configured to control mining vehicle 100 to use the first speed, which was used when travelling route 500 for the first time. This is one option for determining the decreased speed. Reverting to the first speed provides the benefit of increasing the likelihood that that mining vehicle 100 complies with the tolerance criteria, because mining vehicle 100 already successfully travelled though route 500 with the first speed. It is however noted that the speed of mining vehicle 100 might be decreased below the first speed, for example if required by deteriorating road conditions as detected by the vertical acceleration of mining vehicle 100 on route 500.

As noted above, controller 112 may be located at external control system 200. In this case, mining vehicle 100 may be configured to send real-time data to external control system 200. This data may include the mining vehicle's speed, sensor reading(s), e.g., from distance sensor(s) 116, and/or IMU 118, optionally with an indication of the status of compliance with the tolerance criteria. External control system 200 may be configured to analyse the status indication or directly the compliance with the threshold(s) for the operational parameter(s), and increase or decrease the speed of mining vehicle 100 for travelling on the route for a subsequent time accordingly. For example, consistent adherence to tolerance criteria such as clearance thresholds with respect to deviation from the route, expected distance to tunnel wall(s), or vertical acceleration, may be configured to trigger external control system 200 to cause a predefined speed increment, for example as describe above.

Operations of the flow chart of FIG. 4 therefore enable adaptive control of the speed of mining vehicle 100, considering compliance of mining vehicle 100 with tolerance criteria when travelling through route 500 multiple times. Adaptive speed control may be implemented round by round such that compliance with tolerance criteria, or violation of them, affects the speed determined for the next time for travelling the route. It is again pointed out that the terms first time and second time may refer to any two times (e.g., consecutive times) mining vehicle 100 travels through route 500. The first time may therefore not be the initial time of travelling through route 500. Example embodiments of the present disclosure therefore provide an adaptive speed control scheme for mining vehicle 100, which may be used when mining vehicle 100 is configured to travel through the same route for multiple times. Likelihood of collisions or other damage, for example due to poor road conditions, may be decreased by considering compliance with tolerance criteria when mining vehicle travels through the route.

FIG. 7 illustrates an example of an apparatus 700 configured to practise one or more example embodiments. Apparatus 700 may be or comprise a control device, such as for example a server, communicatively coupled to mining vehicle 100, a control apparatus located at mining vehicle 100, controller 112, mining vehicle 100 itself, external control system 200, or in general any apparatus or system configured to implement the functionality described herein. Although apparatus 700 is illustrated as a single device, it is appreciated that, wherever applicable, functions of apparatus 700 may be distributed to a plurality of physically separate apparatuses, for example different components or subsystems of external control system 200.

Apparatus 700 may comprise at least one processor 702. The at least one processor 702 may comprise, for example, one or more of various processing devices, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

Apparatus 700 may further comprise at least one memory 704. The at least one memory 704 may be configured to store, for example, computer program code or the like, for example operating system software and application software. The at least one memory 704 may comprise one or more volatile memory devices, one or more non-volatile memory devices, and/or a combination thereof. For example, the memory may be embodied as magnetic storage devices (such as hard disk drives, etc.), optical magnetic storage devices, or semiconductor memories (such as mask ROM, PROM (programmable ROM), EPROM (erasable PROM), flash ROM, RAM (random access memory), etc.). Memory 704 is provided as an example of a (non-transitory) computer readable medium. The term "non-transitory," as used herein, is a limitation of the medium itself (i.e., tangible, not a signal) as opposed to a limitation on data storage persistency (e.g., RAM vs. ROM). The at least one memory 704 may be also embodied separate from apparatus 700, for example as a computer readable (storage) medium, examples of which include memory sticks, compact discs (CD), or the like.

When apparatus 700 is configured to implement some functionality, some component and/or components of apparatus 700, such as for example the at least one processor 702 and/or the at least one memory 704, may be configured to implement this functionality. Furthermore, when the at least one processor 702 is configured to implement some functionality, this functionality may be implemented using program code 706 comprised, for example, in the at least one memory 704.

The functionality described herein may be performed, at least in part, by one or more computer program product components such as software components. According to an example embodiment, apparatus 700 comprises a processor or processor circuitry, such as for example a microcontroller, configured by the program code 706, when executed, to execute the embodiments of the operations and functionality described herein. Program code 706 is provided as an example of instructions which, when executed by the at least one processor 702, cause performance of apparatus 700.

For example, controller 112 may be at least partially implemented as program code 706 configured to cause apparatus 700 to perform functionality of controller 112. Similarly, transmission or reception of data (e.g., configuration of adaptive speed control parameter(s)) over an internal or external communication interface of controller 112 or a mining vehicle 100 may be controlled by software.

Alternatively, or in addition, the functionality described herein can be performed, at least in part, by one or more hardware logic components. For example, and without limitation, illustrative types of hardware logic components that can be used include field-programmable gate arrays (FPGAs), application-specific integrated circuits (ASICs), application-specific standard products (ASSPs), system-on-a-chip systems (SOCs), complex programmable logic devices (CPLDs), graphics processing units (GPUs), neural processing unit (NPU), tensor processing unit (TPU), or the like.

Apparatus 700 may comprise a communication interface 708 configured to enable apparatus 700 to transmit and/or receive information. Communication interface 708 may comprise an internal or external communication interface, such as for example a radio interface between mining vehicle 100 and external control system 200. Apparatus 700 may further comprise other components and/or functions such as for example user interface 710 comprising at least one input device and/or at least one output device. The input device may take various forms such as a keyboard, a touch screen, or one or more embedded control buttons. The output device may for example comprise a display, a speaker, or the like. When provided at external control system 200, user interface 710 may enable a user, e.g., a human operator, to monitor various functions and data, and to control the mining automation system, for example design and configure routes and/or operating points for mining vehicle(s).

Apparatus 700 may be configured to perform or cause performance of any aspect of the method(s) described herein. Further, a computer program or a computer program product may comprise instructions for causing, when executed by apparatus 700, apparatus 700 to perform any aspect of the method(s) described herein. Further, apparatus 700 may comprise means for performing any aspect of the method(s) described herein. In one example, the means comprises the at least one processor 702, the at least one memory 704 including program code 706 (instructions) configured to, when executed by the at least one processor 702, cause apparatus 700 to perform the method(s). In general, computer program instructions may be executed on means providing generic processing functions. Such means may be embedded for example in a computer, a server, or the like. The method(s) may be thus computer-implemented, for example based algorithm(s) executable by the generic processing functions, an example of which is the at least one processor 702. Apparatus 700 may comprise means for transmitting or receiving information, for example one or more wired of wireless (e.g., radio) transmitters or receivers, which may be coupled or be configured to be coupled to one or more antennas, or transmitter(s) or receiver(s) of a wired communication interface.

According to a first aspect of the present disclosure, an apparatus may be configured to control speed of a mining vehicle. The apparatus may comprise: at least one processor; and at least one memory including computer program code, the at least one memory and the computer program code configured to, with the at least one processor, cause the apparatus at least to: determine a route for the mining vehicle; determine a first speed for the mining vehicle for travelling on the route for a first time; monitor at least one operational parameter of the mining vehicle with respect to at least one tolerance criterion, when travelling on the route for the first time; and determine, based on the monitoring of the at least one operational parameter with respect to the at least one tolerance criterion during the travelling on the route for the first time, a second speed for the mining vehicle for travelling on the route for a second time.

According to an example embodiment of the first aspect, the at least one operational parameter comprises at least one of: an amount of deviation of a position of the mining vehicle from the route, an amount of deviation from an expected distance between the mining vehicle and at least one wall of the tunnel along the route, an amount of deviation from an expected distance between a front end and/or a rear end of the mining vehicle and the at least one wall of the tunnel along the route, or vertical acceleration of the mining vehicle.

According to an example embodiment of the first aspect, the at least one tolerance criterion comprises at least one of: a threshold for an amount of deviation of a position of the mining vehicle from the route; a threshold for an amount of deviation from an expected distance between the mining vehicle and the at least one wall of the tunnel, a threshold for an amount of deviation from an expected distance between a front end and/or a rear end of the mining vehicle and the at least one wall of the tunnel along the route, or a threshold for the vertical acceleration of the mining vehicle.

According to an example embodiment of the first aspect, the computer program code is configured to, with the at least one processor, cause the apparatus to: receive the at least one operational parameter of the mining vehicle from at least one sensor of the mining vehicle.

According to an example embodiment of the first aspect, the at least one sensor of the mining vehicle comprises a distance sensor, an accelerometer, or an inertial measurement unit.

According to an example embodiment of the first aspect, the computer program code is configured to, with the at least one processor, cause the apparatus to: determine to increase speed of the mining vehicle for travelling on the route for the second time, in response to determining the at least one operational parameter to comply with the at least one tolerance criterion throughout the travelling of the route for the first time.

According to an example embodiment of the first aspect, the computer program code is configured to, with the at least one processor, cause the apparatus to: monitor the at least one operational parameter of the mining vehicle when travelling through the route for the second time; determine to revert to the first speed of the mining vehicle for subsequent travelling on the route, in response to detecting the at least one operational parameter to violate the at least one tolerance criterion during the travelling on the route for the second time.

According to an example embodiment of the first aspect, the computer program code is configured to, with the at least one processor, cause the apparatus to: determine to decrease the speed of the mining vehicle for travelling on the route for the second time, in response to detecting the at least one operational parameter to violate the at least one tolerance criterion during the travelling of the route for the first time

According to an example embodiment of the first aspect, the computer program code is configured to, with the at least one processor, cause the apparatus to: receive a configuration for adjusting the speed of the mining vehicle, the configuration comprising at least one of: a maximum increment of the speed of the mining vehicle, a maximum decrement of the speed of the mining vehicle, a maximum allowed speed for the mining vehicle, a maximum number of consecutive speed increments; and determine the second speed in accordance with the configuration.

According to an example embodiment of the first aspect, the computer program code is configured to, with the at least one processor, cause the apparatus to: control the mining vehicle to travel through the route for the first time and/or the second time.

According to a second aspect of the present disclosure, a mining vehicle is disclosed. The mining vehicle may comprise the apparatus according to any example embodiment of the first aspect.

FIG. 8 illustrates an example of a method for controlling speed of a mining vehicle, according to a third aspect of the present disclosure. The method may comprise a computer-implemented method performed by, for example, apparatus 700 such as controller 112, mining vehicle 100, or external control system 200.
At 801, the method may comprise determining a route for the mining vehicle;
At 802, the method may comprise determining a first speed for the mining vehicle for travelling on the route for a first time;
At 803, the method may comprise monitoring at least one operational parameter of the mining vehicle with respect to at least one tolerance criterion, when travelling on the route for the first time;
At 804, the method may comprise determining, based on the monitoring of the at least one operational parameter with respect to the at least one tolerance criterion during the travelling on the route for the first time, a second speed for the mining vehicle for travelling on the route for a second time.

According to an example embodiment of the third aspect, the at least one operational parameter comprises at least one of: an amount of deviation of a position of the mining vehicle from the route, an amount of deviation from an expected distance between the mining vehicle and at least one wall of the tunnel along the route, an amount of deviation from an expected distance between a front end and/or a rear end of the mining vehicle and the at least one wall of the tunnel along the route, or vertical acceleration of the mining vehicle.

According to an example embodiment of the third aspect, the at least one tolerance criterion comprises at least one of: a threshold for an amount of deviation of a position of the mining vehicle from the route; a threshold for an amount of deviation from an expected distance between the mining vehicle and the at least one wall of the tunnel, a threshold for an amount of deviation from an expected distance between a front end and/or a rear end of the mining vehicle and the at least one wall of the tunnel along the route, or a threshold for the vertical acceleration of the mining vehicle.

According to an example embodiment of the third aspect, the method comprises: receiving the at least one operational parameter of the mining vehicle from at least one sensor of the mining vehicle.

According to an example embodiment of the third aspect, the at least one sensor of the mining vehicle comprises a distance sensor, an accelerometer, or an inertial measurement unit.

According to an example embodiment of the third aspect, the method comprises: determining to increase speed of the mining vehicle for travelling on the route for the second time, in response to determining the at least one operational parameter to comply with the at least one tolerance criterion throughout the travelling of the route for the first time.

According to an example embodiment of the third aspect, the method comprises: monitoring the at least one operational parameter of the mining vehicle when travelling through the route for the second time; determining to revert to the first speed of the mining vehicle for subsequent travelling on the route, in response to detecting the at least one operational parameter to violate the at least one tolerance criterion during the travelling on the route for the second time.

According to an example embodiment of the third aspect, the method comprises: determining to decrease the speed of the mining vehicle for travelling on the route for the second time, in response to detecting the at least one operational parameter to violate the at least one tolerance criterion during the travelling of the route for the first time.

According to an example embodiment of the third aspect, the method comprises: receiving a configuration for adjusting the speed of the mining vehicle, the configuration comprising at least one of: a maximum increment of the speed of the mining vehicle, a maximum decrement of the speed of the mining vehicle, a maximum allowed speed for the mining vehicle, a maximum number of consecutive speed increments; and determining the second speed in accordance with the configuration.

According to an example embodiment of the third aspect, the method comprises: controlling the mining vehicle to travel through the route for the first time and/or the second time.

The method may be performed by controller 112, mining vehicle 100, or external control system 200, for example based on program code 706, when executed by processor 702. Various examples of the methods are explained above with regard to functionalities of controller 112 and are therefore not repeated here. It should be understood that example embodiments described may be combined in different ways unless explicitly disallowed.

According to a fourth aspect, an apparatus may comprise: means for determining a route for the mining vehicle; means for determining a first speed for the mining vehicle for travelling on the route for a first time; means for monitoring at least one operational parameter of the mining vehicle with respect to at least one tolerance criterion, when travelling on the route for the first time; and means for determining, based on the monitoring of the at least one operational parameter with respect to the at least one tolerance criterion during the travelling on the route for the first time, a second speed for the mining vehicle for travelling on the route for a second time. The apparatus may comprise means for performing any example embodiment of the method of the third aspect.

According to a fifth aspect, a computer program, a computer program product, or a (non-transitory) computer-readable medium is disclosed. The computer program, computer program product, or (non-transitory) computer-readable medium may comprise program instructions which, when executed by an apparatus, cause the apparatus at least to: determine a route for the mining vehicle; determine a first speed for the mining vehicle for travelling on the route for a first time; monitor at least one operational parameter of the mining vehicle with respect to at least one tolerance criterion, when travelling on the route for the first time; and determine, based on the monitoring of the at least one operational parameter with respect to the at least one tolerance criterion during the travelling on the route for the first time, a second speed for the mining vehicle for travelling on the route for a second time. The computer program, the computer program product, or the (non-transitory) computer-readable medium may comprise program instructions which, when executed by an apparatus, cause the apparatus to perform any example embodiment of the method of the third aspect.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the example embodiments described above may be combined with aspects of any of the other example embodiments described to form further example embodiments without losing the effect sought.

The term 'comprising' is used herein to mean including the method, blocks, or elements identified, but that such blocks or elements do not comprise an exclusive list and a method or apparatus may contain additional blocks or elements.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements. Term "or" may be understood to also cover a case where both of the items separated by "or" are included. Hence, "or" may be understood as an inclusive "or" rather than an exclusive "or". As used herein "at least one" or "one or more" may be understood as "any one of the at least one" or "any one of the one or more".

Although subjects may be referred to as 'first' or 'second' subjects, this does not necessarily indicate any order or importance of the subjects. Instead, such attributes may be used solely for the purpose of making a difference between subjects.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

## Claims

1. An apparatus for controlling speed of a mining vehicle, the apparatus comprising:
at least one processor; and
at least one memory including program code, the at least one memory and the computer program code configured to, when executed by the at least one processor, cause the apparatus at least to:
determine a route for the mining vehicle;
determine a first speed for the mining vehicle for travelling on the route for a first time;
monitor at least one operational parameter of the mining vehicle with respect to at least one tolerance criterion, when travelling on the route for the first time; and
determine, based on the monitoring of the at least one operational parameter with respect to the at least one tolerance criterion during the travelling on the route for the first time, a second speed for the mining vehicle for travelling on the route for a second time.

2. The apparatus according to claim 1, wherein the at least one operational parameter comprises at least one of:
an amount of deviation of a position of the mining vehicle from the route,
an amount of deviation from an expected distance between the mining vehicle and at least one wall of the tunnel along the route,
an amount of deviation from an expected distance between a front end and/or a rear end of the mining vehicle and the at least one wall of the tunnel along the route, or
vertical acceleration of the mining vehicle.

3. The apparatus according to claim 2, wherein the at least one tolerance criterion comprises at least one of:
a threshold for an amount of deviation of a position of the mining vehicle from the route;
a threshold for an amount of deviation from an expected distance between the mining vehicle and the at least one wall of the tunnel,
a threshold for an amount of deviation from an expected distance between a front end and/or a rear end of the mining vehicle and the at least one wall of the tunnel along the route, or
a threshold for the vertical acceleration of the mining vehicle.

4. The apparatus according to claim 2 or 3, wherein the computer program code is further configured to, with the at least one processor, cause the apparatus to:
receive the at least one operational parameter of the mining vehicle from at least one sensor of the mining vehicle.

5. The apparatus according to any of claims 2 to 4, wherein the at least one sensor of the mining vehicle comprises a distance sensor, an accelerometer, or an inertial measurement unit.

6. The apparatus according to any of claims 1 to 5, wherein the computer program code is further configured to, with the at least one processor, cause the apparatus to:
determine to increase speed of the mining vehicle for travelling on the route for the second time, in response to determining the at least one operational parameter to comply with the at least one tolerance criterion throughout the travelling of the route for the first time.

7. The apparatus according to claim 6, wherein the computer program code is further configured to, with the at least one processor, cause the apparatus to:
monitor the at least one operational parameter of the mining vehicle when travelling through the route for the second time;
determine to revert to the first speed of the mining vehicle for subsequent travelling on the route, in response to detecting the at least one operational parameter to violate the at least one tolerance criterion during the travelling on the route for the second time.

8. The apparatus according to any of claims 1 to 5, wherein the computer program code is further configured to, with the at least one processor, cause the apparatus to:
determine to decrease the speed of the mining vehicle for travelling on the route for the second time, in response to detecting the at least one operational parameter to violate the at least one tolerance criterion during the travelling of the route for the first time.

9. The apparatus according to any of claims 1 to 8, wherein the computer program code is further configured to, with the at least one processor, cause the apparatus to:
receive a configuration for adjusting the speed of the mining vehicle, the configuration comprising at least one of:
a maximum increment of the speed of the mining vehicle,
a maximum decrement of the speed of the mining vehicle,
a maximum allowed speed for the mining vehicle,
a maximum number of consecutive speed increments; and determine the second speed in accordance with the configuration.

10. The apparatus according to any of claims 1 to 9, wherein the computer program code is further configured to, with the at least one processor, cause the apparatus to:
control the mining vehicle to travel through the route for the first time and/or the second time.

11. A mining vehicle comprising the apparatus according to any of claims 1 to 10.

12. A method for controlling speed of a mining vehicle, the method comprising:
determining a route for the mining vehicle;
determining a first speed for the mining vehicle for travelling on the route for a first time;
monitoring at least one operational parameter of the mining vehicle with respect to at least one tolerance criterion, when travelling on the route for the first time; and
determining, based on the monitoring of the at least one operational parameter with respect to the at least one tolerance criterion during the travelling on the route for the first time, a second speed for the mining vehicle for travelling on the route for a second time.

13. The method according to claim 12, wherein the at least one operational parameter comprises at least one of:
an amount of deviation of a position of the mining vehicle from the route,
an amount of deviation from an expected distance between the mining vehicle and at least one wall of the tunnel along the route,
an amount of deviation from an expected distance between a front end and/or a rear end of the mining vehicle and the at least one wall of the tunnel along the route, or
vertical acceleration of the mining vehicle.

14. The method according to claim 13, wherein the at least one tolerance criterion comprises at least one of:
a threshold for an amount of deviation of a position of the mining vehicle from the route;
a threshold for an amount of deviation from an expected distance between the mining vehicle and the at least one wall of the tunnel,
a threshold for an amount of deviation from an expected distance between a front end and/or a rear end of the mining vehicle and the at least one wall of the tunnel along the route, or
a threshold for the vertical acceleration of the mining vehicle.

15. A computer program comprising instructions which, when executed by an apparatus, cause the apparatus at least to:
determine a route for the mining vehicle;
determine a first speed for the mining vehicle for travelling on the route for a first time;
monitor at least one operational parameter of the mining vehicle with respect to at least one tolerance criterion, when travelling on the route for the first time; and
determine, based on the monitoring of the at least one operational parameter with respect to the at least one tolerance criterion during the travelling on the route for the first time, a second speed for the mining vehicle for travelling on the route for a second time.
